# EUROPEAN PATENT APPLICATION

(11) **EP 4 838 654 A1**
(43) Date of publication of application: **11.11.2026**
(21) Application number: 25845066.7
(22) Date of filing: 14.07.2025
(51) Int. Cl.: H01M 50/188, H01M 50/184

(54) **BATTERY CELL, AND BATTERY PACK AND VEHICLE INCLUDING SAME**

(30) Priority: 26.07.2024 KR 20240099600
(71) Applicant: LG Energy Solution, Ltd., Seoul 07335 (KR)
(72) Inventor: LEE, Je-Jun, Daejeon 34122 (KR); PARK, Kyeong-Hoon, Daejeon 34122 (KR); KIM, Hak-Kyun, Daejeon 34122 (KR); PARK, Jeong-Ho, Daejeon 34122 (KR); PARK, Pil-Kyu, Daejeon 34122 (KR)
(74) Representative: Goddar, Heinz J.
(86) International application number: PCT/KR2025/010287
(87) International publication number: WO 2026/023970

(57) **Abstract**

A battery cell according to the present disclosure may include: an electrode assembly configured by winding a first electrode, a second electrode, and a separator, interposed therebetween, around a winding axis; a housing configured to receive the electrode assembly through an opening formed on one side thereof and comprising a bent portion formed by bending an end portion of the opening inward; a current collector coupled to one side of the electrode assembly and electrically connected to the first electrode of the electrode assembly; and a cap coupled to the bent portion to cover the opening of the housing, wherein a portion of the current collector may be coupled to the bent portion of the housing.

## Description

### TECHNICAL FIELD

The present disclosure relates to a battery cell, and a battery pack and vehicle including the same. This application is based on and claims priority from Korean Patent Application No. 10-2024-0099600, filed on July 26, 2024, with the Korean Intellectual Property Office, the disclosure of which is incorporated herein in its entirety by reference.

### BACKGROUND ART

Cylindrical battery cells accommodate a jelly-roll-shaped electrode assembly within a cylindrical metal can, and exhibit superior impact resistance and temperature tolerance compared to pouch-type batteries. Accordingly, demand for metal can-shaped battery cells for vehicle battery packs is increasing.

The process of manufacturing a cylindrical can-shaped battery cell includes deep-drawing a metal sheet to form a circular bottom and a cylindrical side wall connected to it, inserting the electrode assembly into the can, and covering the open end of the side wall with a lid.

Crimping or seam welding may be applied to cover the open end of the battery can with a lid and secure the lid to the battery can.

Increasing battery capacity and reducing costs are critical technological challenges, and seam welding is attracting attention. In connection with seam welding, preventing damage to the electrode assembly accommodated within the housing during seam welding may be a critical technical challenge.

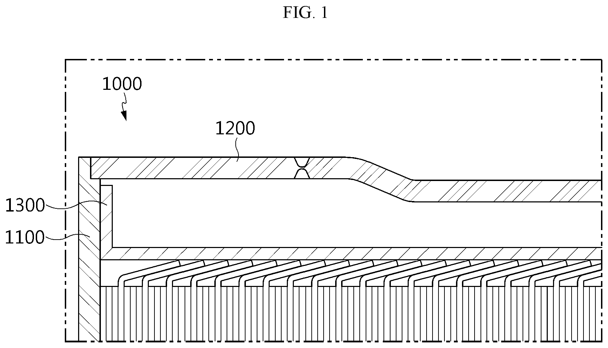

FIG. 1 shows an example of a seam welding in which the housing 1100 of the cylindrical battery 1000 and the cap 1200 are directly welded to each other, instead of beading and crimping processes performed on the opening of the housing.

When this seam welding process is processed by laser welding, there is a risk of component being perforated during the welding process to join the housing 1100 and cap 1200, or damage to the separator due to thermal propagation to the electrode assembly inside the housing 1100.

In addition, as illustrated in FIG. 1, the contact portion between the housing 1100 and cap 1200 may be spaced apart from the contact portion between the housing 1100 and the current collector 1300. Therefore, welding between the housing 1100 and the cap 1200, and welding between the housing 1100 and the current collector 1300 must to be performed separately, inevitably resulting in complex processes.

Therefore, it is necessary to develop a battery cell structure capable of minimizing the risk of damage to the electrode assembly during welding, increasing welding convenience, and/or preventing energy density loss in the battery.

### DISCLOSURE

### Technical Problem

The present disclosure is designed to solve the problems of the related art, and therefore the present disclosure is directed to providing a battery cell capable of minimizing the risk of damage to the electrode assembly during welding, increasing welding convenience, and/or preventing energy density loss in the battery.

The technical problems that the present disclosure seeks to solve are not limited to the above-mentioned problems, and other objectives and advantages of the present disclosure not mentioned above will be clearly understood by those skilled in the art from the description of the invention described below. In addition, it will be readily apparent that the objectives and advantages of the present disclosure may be realized by the means set forth in the claims and combinations thereof.

### Technical Solution

In one aspect of the present disclosure, there is provided a battery cell including: an electrode assembly configured by winding a first electrode, a second electrode, and a separator, interposed therebetween, around a winding axis; a housing configured to receive the electrode assembly through an opening formed on one side thereof and including a bent portion formed by bending an end portion of the opening inward; a current collector coupled to one surface of the electrode assembly and electrically connected to the first electrode of the electrode assembly; and a cap coupled to the bent portion to cover the opening of the housing, wherein a portion of the current collector may be coupled to the bent portion of the housing.

According to the present disclosure, the current collector may include a first coupling portion coupled to the electrode assembly and a second coupling portion coupled to the bent portion, and the second coupling portion may be welded to the bent portion while being folded in at least two overlapping layers.

According to the present disclosure, welding may be performed while a portion of the current collector is interposed between the cap and the bent portion.

In addition, an inner end of the bent portion may be formed with a step, and the portion of the current collector may be inserted into the stepped portion so as to be disposed between the bent portion and the cap.

In addition, a recess may be formed at an edge of the cap to be recessed upward, and the portion of the current collector may be inserted into the recess so as to be disposed between the bent portion and the cap.

In addition, the current collector may include a protrusion folded in two overlapping layers and protruding upward, and welding may be performed while the protrusion is interposed between the cap and the bent portion.

In addition, welding may be performed while an edge of the current collector is in contact with a lower surface of the bent portion and an edge of the cap is in contact with the upper surface of the bent portion.

In addition, welding may be performed while an edge of the cap is interposed between the bent portion and the current collector.

In another aspect of the present disclosure, there is provided a battery cell including: an electrode assembly configured by winding a first electrode, a second electrode, and a separator, interposed therebetween, around a winding axis; a housing configured to receive the electrode assembly through an opening formed on one side thereof and including a bent portion formed by bending an end portion of the opening inward; and a cap coupled to the bent portion to cover the opening of the housing and electrically connected to the first electrode of the electrode assembly.

According to the present disclosure, the cap may have an injection hole provided for injecting an electrolyte into the housing.

In addition, an edge of the cap may be coupled to the bent portion, and at least a portion of a central portion of the cap may protrude toward the electrode assembly to be coupled to the electrode assembly.

In addition, the cap may be disposed in an inner side of the bent portion and may include a break portion for venting.

In another aspect of the present disclosure, there is provided a battery pack including a battery cell according to an embodiment of the present disclosure.

In another aspect of the present disclosure, there is provided a vehicle including a battery pack according to an embodiment of the present disclosure.

### Advantageous Effects

According to the present disclosure, it is possible to prevent or suppress damage to the separator of the electrode assembly due to a laser beam used during welding or the heat generated during welding. In addition, the convenience of the welding process can be improved, and the welding among the housing, the cap, and the current collector can be performed more firmly.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a conventional method of securing a lead and a battery can using a crimping method.
FIG. 2 is a perspective view of a battery cell according to an embodiment of the present disclosure.
FIG. 3 is a perspective view of the battery cell, flipped upside down, illustrated in FIG. 2.
FIG. 4 is a schematic perspective view of the housing illustrated in FIG. 2.
FIG. 5 is a schematic cross-sectional view taken along line A-A' in FIG. 2.
FIG. 6 is a schematic perspective view of the current collector illustrated in FIG. 5.
FIG. 7 is a partially enlarged cross-sectional view illustrating a structure in which a current collector, a cap, and a housing are welded in a battery cell according to an embodiment of the present disclosure.
FIG. 8 is a partially enlarged cross-sectional view illustrating a structure in which a current collector, a cap, and a housing are welded in a battery cell according to another embodiment of the present disclosure.
FIG. 9 is a partially enlarged cross-sectional view illustrating a structure in which a current collector, a cap, and a housing are welded in a battery cell according to another embodiment of the present disclosure.
FIG. 10 is a partially enlarged cross-sectional view illustrating a structure in which a current collector, a cap, and a housing are welded in a battery cell according to another embodiment of the present disclosure.
FIG. 11 is a partially enlarged cross-sectional view illustrating a structure in which a current collector, a cap, and a housing are welded in a battery cell according to another embodiment of the present disclosure.
FIG. 12 is a partially enlarged cross-sectional view illustrating a structure in which a current collector, a cap, and a housing are welded in a battery cell according to another embodiment of the present disclosure.
FIG. 13 is a partially enlarged cross-sectional view illustrating a structure in which a current collector, a cap, and a housing are welded in a battery cell according to another embodiment of the present disclosure.
FIG. 14 is a partially enlarged cross-sectional view illustrating a structure in which a current collector, a cap, and a housing are welded in a battery cell according to another embodiment of the present disclosure.
FIG. 15 is a drawing illustrating a process for manufacturing a housing according to an embodiment of the present disclosure.
FIG. 16 is a schematic cross-sectional view of a battery cell according to another embodiment of the present disclosure.
FIG. 17 is a drawing illustrating a battery pack according to an embodiment of the present disclosure.
FIG. 18 is a drawing illustrating a vehicle including the battery pack in FIG. 17.

### BEST MODE

Hereinafter, preferred embodiments of the present disclosure will be described in detail with reference to the accompanying drawings.

The present disclosure is not limited to the embodiments disclosed below, but may be subject to various modifications and may be implemented in various different forms. The embodiments are merely provided so that the disclosure may be complete and to fully convey the scope of the invention to those skilled in the art. Therefore, it should be understood that the present disclosure is not limited to the embodiments disclosed herein, and that the configurations of one embodiment may be substituted for or added to the configurations of another embodiment. Further, all modifications, equivalents, and alternatives falling within the concept and scope of the present disclosure are intended to be included within the scope of the present disclosure.

In addition, the present disclosure may include various embodiments. Redundant descriptions of substantially the same or similar configurations will be omitted from respective embodiments, and a description will be made based on differences therebetween.

The accompanying drawings are provided for the purpose of facilitating understanding of the embodiments disclosed herein, and should not be construed as limiting the technical concept disclosed in the present specification. It should be understood that various modifications, equivalents, and substitutions can be made without departing from the concept and scope of the present disclosure, and all such variations are intended to be included within the scope of the present disclosure. In the drawings, the sizes or thicknesses of components may be exaggerated or reduced for clarity of understanding, but such illustrations should not be construed as limiting the scope of protection of the present disclosure.

The terminology used in the present specification is intended only to describe particular embodiments and examples, and is not intended to limit the scope of the present disclosure. The singular forms include plural forms as well, unless the context clearly indicates otherwise. Terms such as "include" and "comprise" are intended to specify the presence of stated features, numbers, steps, operations, elements, components, or combinations thereof, but do not preclude the presence or addition of one or more other features, numbers, steps, operations, elements, components, or combinations thereof.

Throughout the specification, unless otherwise stated, respective elements may include a single or a plurality of elements.

Although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position, arrangement, or rotation of the target object or the position of the observer.

In the embodiment of the present disclosure, a winding axis direction refers to a direction in which the central winding axis of the jelly-roll-type electrode assembly extends, a radial direction refers to a direction that approaches (centripetal) or moves away from (centrifugal) the axis, and a circumferential direction refers to a direction surrounding the axis.

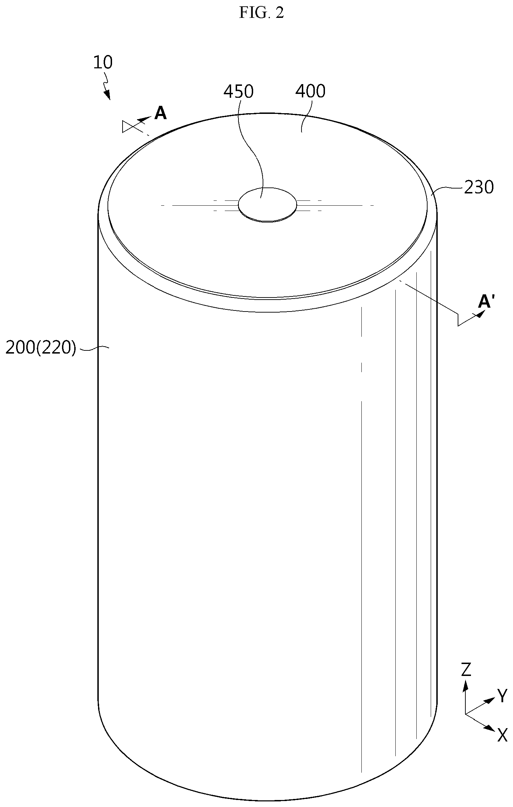

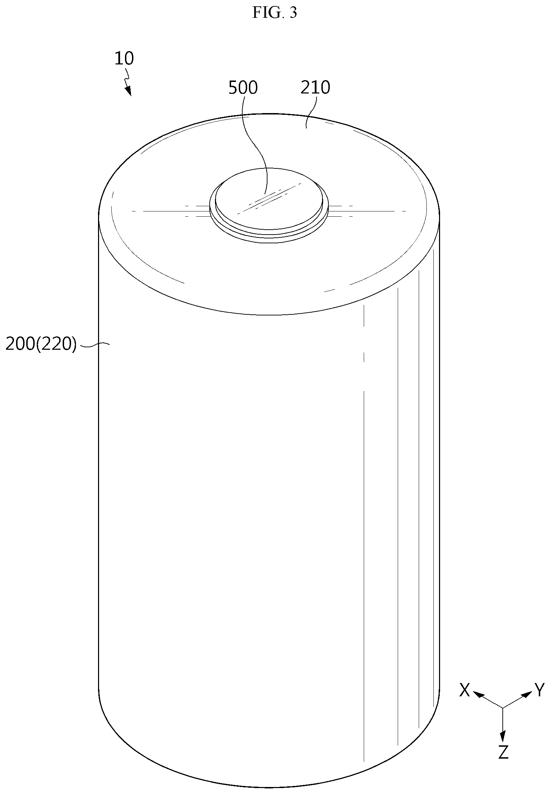

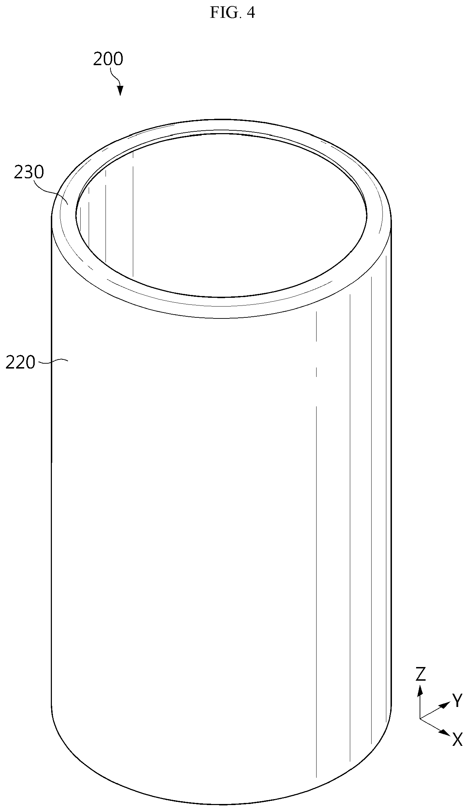

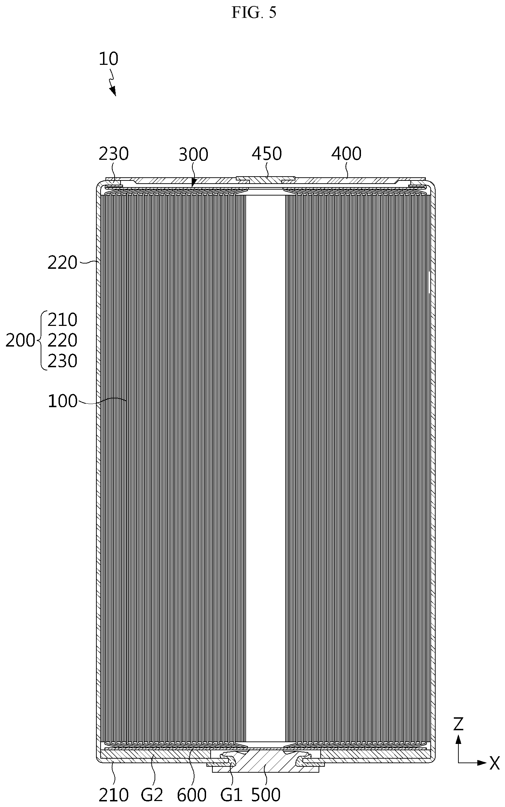

FIG. 2 is a perspective view of a battery cell according to an embodiment of the present disclosure. FIG. 3 is a perspective view of the battery cell, flipped upside down, illustrated in FIG. 2. FIG. 4 is a schematic perspective view of the housing illustrated in FIG. 2. FIG. 5 is a schematic cross-sectional view taken along line A-A' in FIG. 2.

Referring to FIGS. 2 to 5, a battery cell 10 according to the present embodiment may include an electrode assembly 100, a housing 200, a current collector 300, and a cap 400.

The electrode assembly 100 may be in the form of a jelly-roll in which a first electrode, a second electrode, and a separator interposed therebetween are wound in the winding axis direction. Specifically, the electrode assembly 100 may be manufactured by preparing a first electrode, a second electrode, and a separator, which have predetermined widths and extend in the longitudinal direction, stacking the first electrode, the separator, the second electrode, and the separator in sequence to form a laminate, and winding the laminate around a winding axis into a jelly-roll shape. The structure of the electrode assembly 100 is not limited to the embodiment and may have a winding structure well known in the art.

The housing 200 may be formed with a hollow inner space. An opening may be formed at one end of the housing 200. That is, one end of the housing 200, for example, the upward direction (Z-axis direction) end in FIG. 4, may be formed to have an opening. In addition, the other end, for example, the lower end, of the housing 200 may be configured to be closed. The electrode assembly 100 may be received in the housing through the opening of the housing 200.

In particular, a bent portion 230 may be provided at the upper end of the housing 200 where the opening is formed. The bent portion 230 may be formed by bending a portion of the upper end inward.

More specifically, as illustrated in FIG. 5, the housing 200 may include a bottom portion 210 and a side wall 220 extending upward from the edge of the bottom portion 210. A portion of the upper end of the side wall 220 may be bent inward, forming the bent portion 230. In this case, the bent portion 230 may be bent to form a substantially right angle with the side wall 220. For reference, the bent portion 230 may be bent to form a nearly right angle with the side wall 220, and to more intuitively express this, the term "bending" may be used interchangeably with "folding." The bending of the bent portion 230 may be performed through rolling processing (or roll flanging processing), which will be further described later.

The current collector 300 may be attached to one surface of the electrode assembly 100. The current collector 300 may be electrically connected to the first electrode. Specifically, the current collector 300 may be made of a metal material and may be formed in a roughly plate shape. The current collector 300 may be attached to one surface of the electrode assembly 100, for example, the upper surface of the electrode assembly 100 (in the +Z-axis direction) as shown in FIG. 5. In this case, a portion of the current collector 300 may be welded to the electrode assembly 100. Through this joining, the current collector 300 may be electrically connected to the first electrode of the electrode assembly 100.

In addition, a portion of the current collector 300 may be coupled to the housing. In particular, a portion of the current collector 300 may be coupled to the bent portion 230. The current collector 300 may electrically connect the housing 200 and the first electrode.

The cap 400 may be coupled to the housing 200 to cover the opening of the housing 200. Specifically, the cap 400 may be formed in a shape corresponding to the upper end of the housing. For example, the cap 400 may be formed in a disc shape. The cap 400 may be coupled to the housing 200. For example, the cap 400 may be welded to the housing 200, thereby covering and closing the opening of the housing 200. In particular, in the present embodiment, the edge of the cap 400 may be welded to the bent portion 230 of the housing.

According to the above-described configuration, the cap 400 and the current collector 300 may be welded to the bent portion 230. In this case, since the bent portion 230 is bent relative to the side wall 220, the cap 400 and current collector 300 may be easily and securely welded.

Specifically, in conventional designs, the cap and current collector are welded to the side wall of a housing, which is vertically aligned. However, the cap and current collector have an overall plate shape and may be disposed horizontally. That is, the cap and current collector, which are disposed horizontally, must be welded to the surface of the vertically aligned housing. Therefore, the welding process is difficult, and the available welding area may be limited. In addition, during the laser welding process, a laser beam is likely to penetrate the area where the housing and cap contact each other, or the heat generated during welding is likely to propagate to the electrode assembly inside the housing, causing damage to the separator.

However, in the present embodiment, the cap 400 and the current collector 300 may be welded to the horizontally bent portion 230. That is, welding may be performed with the cap 400, the current collector 300, and the bent portion 230 all disposed horizontally, which is completely different from the configuration used in conventional welding. Therefore, the welding process may be facilitated and the welding area may be increased. In addition, it is possible to prevent or suppress a laser beam penetration and thermal propagation to the electrode assembly during the welding process.

Hereinafter, the structures of the current collector and cap will be further described.

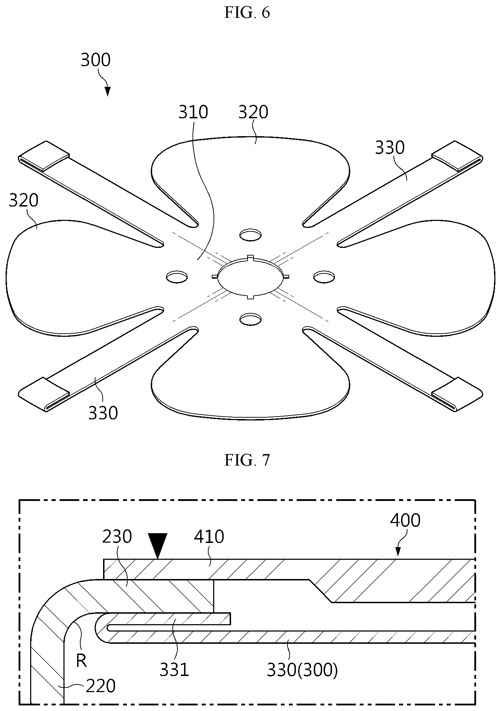

FIG. 6 is a schematic perspective view of the current collector illustrated in FIG. 5.

Referring to both FIGS. 6 and 5, the current collector 300 according to the present embodiment may include a first coupling portion 320 and a second coupling portion 330. The first coupling portion 320 may be welded to the electrode assembly 100 and electrically connected to the first electrode. A plurality of first coupling portions 320 may be provided, and for example, as illustrated in FIG. 6, four first coupling portions 320 may be provided. The plurality of first coupling portions 320 may be disposed radially from the central portion 310. The second coupling portion 330 may be coupled to the bent portion 230 and electrically connected to the housing 200. The second coupling portion 330 may have a predetermined width and may be formed to extend in one direction. A plurality of second coupling portions 330 may be provided, and for example, four second coupling portions 330 may be provided. The plurality of second coupling portions 330 may be disposed radially from the central portion 310. In this case, the first coupling portions 320 and the second coupling portions 330 may be arranged alternately.

In addition, the current collector 300 may be formed in a plate shape overall. A through-hole for injecting an electrolyte may be formed in the central portion 310 of the current collector.

In particular, in the present embodiment, the end portion of the second coupling portion 330 may be folded in at least two overlapping layers. Specifically, the end portion of the second coupling portion 330 is folded inward by 180 degrees, so that the second coupling portion 330 has at least two overlapping layers. In this case, the folded portion (i.e., the overlapping portion) may be positioned on the upper side. In addition, the double-overlapping portion may be coupled to the bent portion 230 of the housing. This will be described later. Although the second coupling portion is folded in two overlapping layers, it may be configured to be folded in more than two layers.

Referring back to FIGS. 2 and 5, the cap 400 may be formed in an overall plate shape. A hole may be formed in the center of the cap 400 for injecting electrolyte into the housing 200. A sealing cap 450 may be coupled to this hole. The sealing cap 450 may be coupled to the hole after the electrolyte injection is completed, thereby sealing the hole.

The basic structures of the current collector 300 and the cap 400 may be the same as those described above. However, the detailed structures of the end portion of the second coupling portion 330 of the current collector 300 and the edge of the cap 400 may be modified in various ways. That is, the detailed structures of the end portion of the second coupling portion 330 and the edge of the cap 400 may be modified depending on the structure in which the current collector 300, the cap 400, and the bent portion 230 are welded. This will be described in detail in the subsequent embodiments of the welding structure.

Hereinafter, embodiments of a structure in which the current collector 300 and the cap 400 are welded to the bent portion 230 will be described.

FIGS. 7 to 14 are partially enlarged cross-sectional views illustrating embodiments of a structure in which the current collector, the cap, and the housing are welded. Specifically, FIGS. 7 to 14 are partially enlarged cross-sectional views of the bent portion of the housing, and the current collector and cap coupled to the bent portion.

FIG. 7 is a partially enlarged cross-sectional view illustrating a structure in which a current collector, a cap, and a housing are welded in a battery cell according to an embodiment of the present disclosure.

Referring to both FIGS. 7 and 6, a portion of the current collector 300 may be folded in at least two overlapping layers. Specifically, the end portion 331 of the second coupling portion 330 of the current collector may be folded to overlap each other in two or more layers. For example, as illustrated in FIG. 7, the end portion 331 of the second coupling portion 330 may be folded (i.e., bent) inward by 180 degrees to be formed in two layers. In this case, the folded portion 331 may be disposed on the upper side. For reference, although not illustrated in FIG. 7, referring to FIG. 6, the electrode assembly 100 may be coupled to the lower surface of the current collector 300. That is, the current collector 300 may be coupled to the upper surface of the electrode assembly 100.

Then, the double-overlapping portion may be coupled to the bent portion 230. Specifically, the folded portion 331 of the second coupling portion 330 may be coupled to the lower surface of the bent portion 230. In addition, the edge 410 of the cap 400 may be coupled to the upper surface of the bent portion 230. In this case, as illustrated in FIG. 7, the edge 410 of the cap may be formed to be thinner than the central portion.

That is, the cap 400, the bent portion 230, and the second coupling portion 331 may be sequentially stacked in the vertical direction. This arrangement is possible because the bent portion 230 is bent and disposed horizontally.

The stacked cap 400, bent portion 230, and second coupling portion 330 may be welded. For example, the point indicated by the arrow (inverted triangle) in FIG. 7 may be welded vertically. Thus, the cap 400, bent portion 230, and second coupling portion 330 may be welded at once. That is, the welded portion (welding area) may extend vertically, forming the cap, the bent portion, and the current collector.

According to the present embodiment, the cap 400, the housing 200 (i.e., the bent portion), and the current collector 300 may be welded while being stacked vertically. In this case, the cap 400, the housing 200 (i.e., the bent portion), and the current collector 300 may be in surface contact with each other. Therefore, the welding process may be facilitated. In addition, the risk of the welded portion being penetrated by a laser beam may be reduced during the welding process.

In addition, in the conventional welding process, welding was performed on the side of the housing (the side at the top of the housing), which resulted in the welding heat being directly transferred to the electrode assembly through the side of the housing, potentially damaging the separator. However, in the present embodiment, welding is performed on the bent portion 230 rather than the side wall 220 of the housing, thereby preventing or suppressing damage to the separator due to the welding heat.

In particular, in the present embodiment, welding may be performed with the second coupling portion 330 folded in two overlapping layers. In this case, welding may be primarily performed between the folded portion 331 of the second coupling portion and the bent portion 230, and the second coupling portion below the folded portion 331 may not be welded or may be partially welded. In this regard, the propagation of welding heat to the electrode assembly 100 may be effectively blocked by the current collector 300 (specifically, the current collector below the folded portion). Therefore, damage to the separator due to welding heat may be further prevented.

In addition, when welding two components, ensuring good contact between the components being welded may be an important factor in determining welding quality. In the present embodiment, in a case where the end portion of the second coupling portion 330 is folded in two overlapping layers, since the second coupling portion 330 is made of metal, it may have a certain level of elasticity. Therefore, the folded portion 331 of the second coupling portion may have a restorative force that allows it to unfold, thereby allowing the folded portion 331 to adhere closely to the bent portion 230. Therefore, the welding quality between the bent portion 230 and the current collector 330 may be improved.

Meanwhile, referring to FIG. 7, the point R where the side wall of the housing and the bent portion are connected may be formed as a curved surface. This results from the characteristics of a roll flanging process described below, which may bend the side wall and the bent portion into such a curved shape. However, the radius of curvature of the curved surface may be very small, and thus, the expression "the side wall and the bent portion are bent" may be used interchangeably.

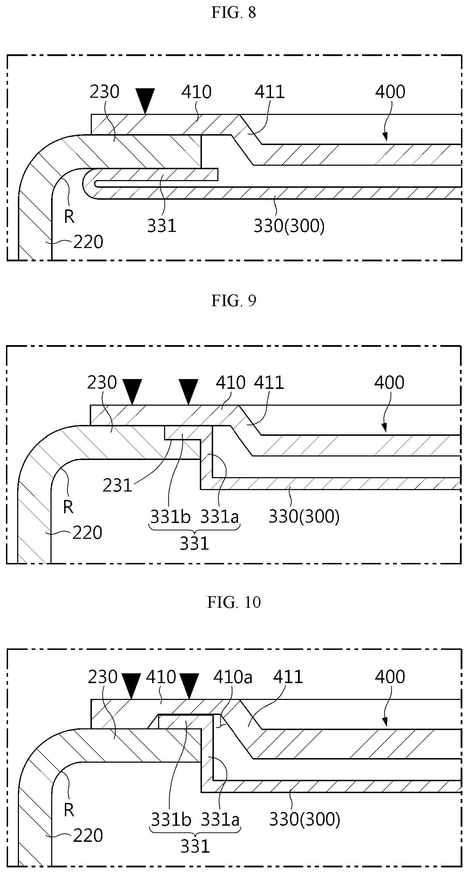

FIG. 8 is a partially enlarged cross-sectional view illustrating a structure in which a current collector, a cap, and a housing are welded in a battery cell according to another embodiment of the present disclosure.

Referring to FIG. 8, the end portion 331 of the second coupling portion of the current collector 300 may be folded in two overlapping layers. The double-overlapping portion 331 may be coupled to the lower surface of the bent portion 230. In addition, the edge 410 of the cap may be coupled to the upper surface of the bent portion 230. In this case, as illustrated in FIG. 8, the edge 410 of the cap may be positioned higher than the central portion. In addition, a bent section, i.e., a connecting portion 411, may be provided between the central portion of the cap 400 and the edge 410.

According to the present embodiment, the cap 400, the bent portion 230, and the second coupling portion 330 may be welded while being stacked vertically. In this case, the cap 400, the bent portion 230, and the second coupling portion 330 may be in surface contact with each other. Therefore, the welding process may be facilitated. In addition, the risk of the welded portion being penetrated by a laser beam during the welding process may be reduced.

FIG. 9 is a partially enlarged cross-sectional view illustrating a structure in which a current collector, a cap, and a housing are welded in a battery cell according to another embodiment of the present disclosure.

Referring to FIG. 9, a portion of the current collector 300 may be interposed between the cap 400 and the bent portion 230, and welding may be performed in this state. Specifically, the end portion 331 of the second coupling portion may include a first part 331a bent upward and a second part 331b extending horizontally from the first part 331a. In addition, the second part 331b of the second coupling portion may be interposed between the bent portion 230 and the cap 400.

For example, as illustrated in FIG. 9, the inner end of the bent portion 230 may be formed with a step. The second part 331b may be seated on the stepped surface 231. The edge 410 of the cap may be positioned on the upper side of the bent portion 230 and the second part 331b.

According to the present embodiment, the cap 400, the bent portion 230, and the second part 331b of the current collector may be stacked vertically and welded in this state. Therefore, the cap 400, the bent portion 230, and the current collector 330 may be welded at once. In this case, the cap 400, the bent portion 230, and the second coupling portion 330 may be in surface contact with each other. Therefore, the welding process may be facilitated. In addition, the risk of the welded portion being penetrated by a laser beam during the welding process may be reduced.

In addition, as indicated by the arrows in FIG. 9, the stacked portion of the cap 400 and the bent portion 230 may be further welded, thereby more firmly bonding the cap 400 to the housing 200.

FIG. 10 is a partially enlarged cross-sectional view illustrating a structure in which a current collector, a cap, and a housing are welded in a battery cell according to another embodiment of the present disclosure.

Referring to FIG. 10, a portion of the current collector 300 may be interposed between the cap 400 and the bent portion 230, and welding may be performed in this state. Specifically, the end portion 331 of the second coupling portion may include a first part 331a bent upward and a second part 331b extending horizontally from the first part 331a. In addition, the second part 331b of the second coupling portion may be interposed between the bent portion 230 and the cap 400.

For example, as illustrated in FIG. 10, the edge 410 of the cap may be seated on the upper surface of the bent portion 230. In addition, a recess 410a may be provided at the edge 410 of the cap to be recessed upward. The second part 331b of the second coupling portion may be inserted into the recess 410a.

According to the present embodiment, the cap 400, the bent portion 230, and the second part 331b of the current collector may be stacked vertically and welded in this state. Therefore, the cap 400, the bent portion 230, and the current collector 330 may be welded at once. In this case, the cap 400, the bent portion 230, and the second coupling portion 330 may be in surface contact with each other. Therefore, the welding process may be facilitated. In addition, the risk of the welded portion being penetrated by a laser beam during the welding process may be reduced.

In addition, as indicated by the arrows in FIG. 10, the portion where the cap 400 and the bent portion 230 are stacked may be further welded, thereby more firmly bonding the cap 400 to the housing 200.

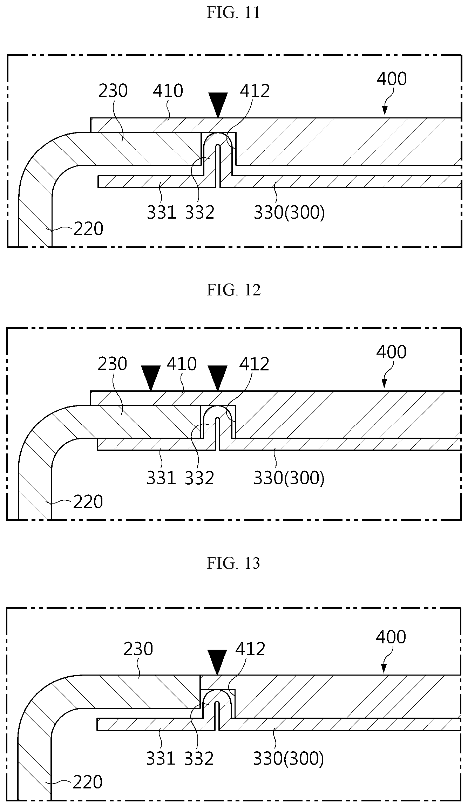

FIG. 11 is a partially enlarged cross-sectional view illustrating a structure in which a current collector, a cap, and a housing are welded in a battery cell according to another embodiment of the present disclosure.

Referring to FIG. 11, the current collector 300 may have a protrusion 332. The protrusion 332 may be formed by configuring a portion of the current collector 300 in overlapping layers. For example, the protrusion 332 may be formed by folding a portion of the second coupling portion 330 in overlapping layers. Specifically, the second coupling portion 330 may be first bent upward by 90 degrees, then bent downward by 180 degrees in overlapping layers, and finally bent by 90 degrees so that the end portion 331 of the second coupling portion extends horizontally, thereby forming the protrusion 332 of the above structure. The protrusion 332 may be formed to protrude upward.

The edge 410 of the cap 400 may be seated on the upper side of the bent portion 230. In this case, the cap 400 may be formed with a step such that the edge 410 of the cap is thinner than the central portion 412. Then, a gap may be formed between the bent portion 230 and the central portion 412 of the cap, so the protrusion 332 may be inserted into this gap.

According to the present embodiment, the protrusion 332 may be inserted into a gap between the cap 400 and the bent portion 230, and welding may be performed in this state. Therefore, the cap 400, the bent portion 230, and the current collector 300 may be welded at once. Although not shown in the drawing, the portion where the edge 410 of the cap and the bent portion 230 are stacked may be further welded, thereby more firmly joining the cap 400 to the housing 200.

In particular, in the present embodiment, the double-layered protrusion 332 may have a predetermined elasticity, and thus, the protrusion 332 may spring back in the space between the bent portion 230 and the cap 400. Accordingly, the protrusion 332 may be tightly fitted to and completely sealed against the bent portion 230 and the cap 400, thereby allowing the cap 400, the bent portion 230, and the current collector 300 to be firmly welded.

FIG. 12 is a partially enlarged cross-sectional view illustrating a structure in which a current collector, a cap, and a housing are welded in a battery cell according to another embodiment of the present disclosure.

Referring to FIG. 12, the current collector 300 may have a protrusion 332. The protrusion 332 may be formed to protrude upward.

The edge 410 of the cap 400 may be seated on the upper side of the bent portion 230. In this case, the cap 400 may be formed with a step such that the edge 410 of the cap is thinner than the central portion 412. Then, a gap may be formed between the bent portion 230 and the central portion 412 of the cap, so the protrusion 332 may be inserted into this gap. In addition, with the protrusion 332 inserted, the edge 331 of the current collector may be in close contact with the bent portion 230, and the central portion of the current collector may be in close contact with the lower surface of the cap 400.

According to the present embodiment, the protrusion 332 may be inserted into a gap between the cap 400 and the bent portion 230, and welding may be performed in this state. Therefore, the cap 400, the bent portion 230, and the current collector 300 may be welded at once. In addition, as shown by the arrows in FIG. 12, the portion where the cap 400, the bent portion 230, and the current collector 300 are stacked may be further welded at once, thereby welding the cap 400, the bent portion 230, and the current collector 300 with a higher bonding strength.

FIG. 13 is a partially enlarged cross-sectional view illustrating a structure in which a current collector, a cap, and a housing are welded in a battery cell according to another embodiment of the present disclosure.

Referring to FIG. 13, the current collector 300 may have a protrusion 332. The protrusion 332 may be formed to protrude upward.

The cap 400 may be disposed on the inner side of the bent portion 230. Specifically, the edge of the cap may contact the inner surface of the bent portion 230. In this case, the cap 400 may be formed with a step such that the edge of the cap is thinner than the center portion 412. Then, a gap may be formed between the bent portion 230 and the center portion 412 of the cap, and the protrusion 332 may be inserted into this gap.

According to the present embodiment, the protrusion 332 may be inserted the gap between the cap 400 and the bent portion 230, and welding may be performed in this state. In particular, the elasticity of the protrusion 332 allows it to come into close contact with the cap 400 and the bent portion 230. Therefore, the cap 400, the bent portion 230, and the current collector 300 may be easily and firmly welded at once.

In particular, according to the present embodiment, the upper surface of the bent portion 230 and the upper surface of the cap 400 may form the same plane. That is, the upper surface of the battery cell 10 may form a flat surface overall. When the upper surface of the battery cell is formed flat in this manner, the battery cell may be stably disposed in the pack housing. For reference, the battery cell may be disposed upside down so that its upper surface touches the bottom of the pack housing. In addition, when cooling is performed through the upper surface of the battery cell 10, the cooling area (i.e., contact area) may become larger, thereby enabling efficient cooling.

Although, in the drawing, the edge of the current collector, i.e., the end portion 331 of the second coupling portion, is separated from the bent portion 230, the end portion 331 of the second coupling portion may be in close contact with the lower surface of the bent portion 230, as shown in FIG. 12. In this case, the portion where the bent portion 230 and the current collector 300 are stacked may be further welded, thereby enabling the bent portion 230 and the current collector 300 to be welded more firmly.

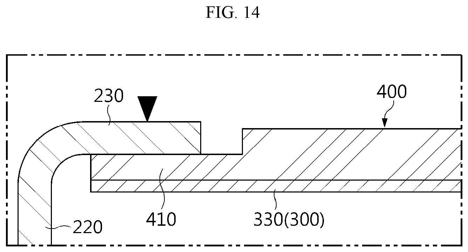

FIG. 14 is a partially enlarged cross-sectional view illustrating a structure in which a current collector, a cap, and a housing are welded in a battery cell according to another embodiment of the present disclosure.

Referring to FIG. 14, the edge 410 of the cap 400 may be interposed between the bent portion 230 and the second coupling portion 330. Specifically, the cap 400 may be formed with a step such that the edge 410 of the cap is formed thinner than the center portion. The cap 400 may be disposed on the current collector 300. In this case, the edge 410 of the cap may be disposed under the bent portion 230, so that the edge 410 of the cap may contact the lower surface of the bent portion 230.

According to the present embodiment, the bent portion 230, the cap 400, and the current collector 300 may be stacked vertically and welded in this state. In this case, the bent portion 230, the cap 400, and the current collector 300 may be in surface contact with each other. Therefore, the welding process may be facilitated. In addition, the risk of the welded portion being penetrated by a laser beam during the welding process may be reduced.

Referring back to FIG. 5, the battery cell 10 according to the present embodiment may further include an electrode terminal 500 and a second current collector 600.

The electrode terminal 500 may be coupled to the closed end of the housing 200, i.e., the bottom portion 210 of the housing. Specifically, a terminal hole may be formed in the bottom portion 210 of the housing so as to pass through it, and the electrode terminal 500 may be coupled to the terminal hole.

The second current collector 600 may be coupled, or more specifically, welded, to the lower surface of the electrode assembly 100. The second current collector 600 may be electrically connected to the second electrode of the electrode assembly 100. The second current collector 600 may be welded to the electrode terminal 500, thereby electrically connecting the electrode terminal 500 to the second electrode.

In addition, an insulating member G1 for insulation between the housing 200 and the electrode terminal 500, and an insulating sheet G2 for insulation between the second current collector 600 and the housing 200 may be further provided.

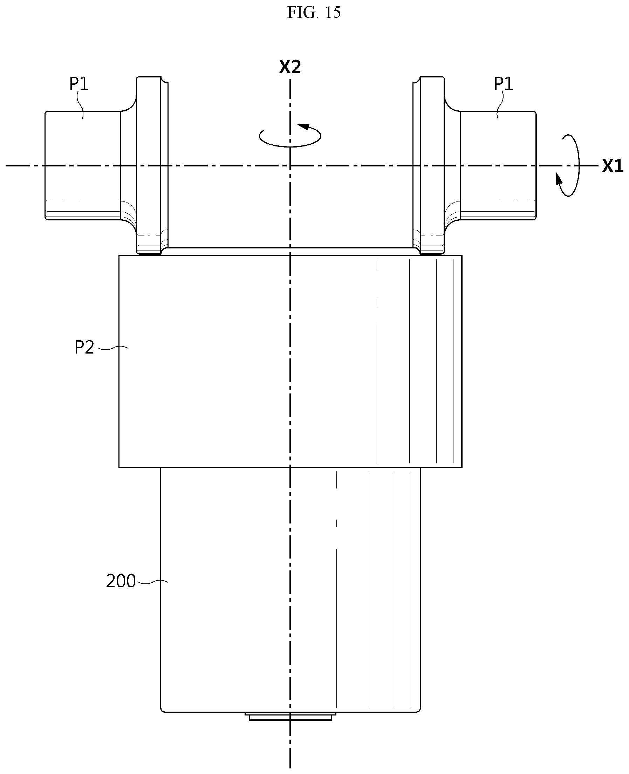

Hereinafter, a method of forming the bent portion by bending the housing, for example, using a roll flanging process, will be described. FIG. 15 is a drawing illustrating a process for manufacturing a housing according to an embodiment of the present disclosure.

Referring to FIG. 15, the housing 200 may be secured by a clamping member P2. In this case, an electrode assembly may be housed within the housing 200.

A roller P1 may be disposed on the upper side of the housing 200. For example, two rollers P1 may be disposed on the upper side of the housing. The two rollers P1 may be disposed so that their processing surfaces correspond to the edge of the housing 200. Each roller P1 may rotate around a first rotational axis X1. In addition, the two rollers P1 may revolve around a second rotational axis X2. When the rollers P1 rotate and revolve, and the processing surfaces, i.e., the rounded surfaces, of the rollers come into contact with and press downward the end of the housing 200, the end of the housing 200 may be bent inward along the processing surfaces, i.e., the rounded surfaces, of the rollers P1. In this case, by adjusting the processing time and processing interval to induce sufficient plastic deformation of the housing 200, the bent portion may be processed into a smooth surface.

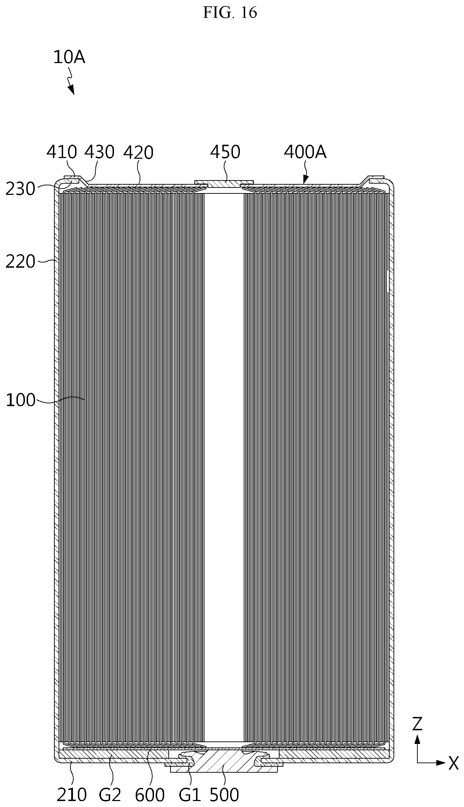

FIG. 16 is a schematic cross-sectional view of a battery cell according to another embodiment of the present disclosure.

Referring to FIG. 16, a battery cell 10A according to the present embodiment may include an electrode assembly 100, a housing 200, and a cap 400A.

Here, the electrode assembly 100 and the housing 200 may be substantially the same as those in the previous embodiment illustrated with reference to FIG. 5.

The cap 400A may be coupled to the housing 200 to cover the opening of the housing 200. Specifically, the cap 400A may be formed in a shape corresponding to the opening of the housing 200. The cap 400A may be coupled to the housing 200 to cover, i.e., close, the opening of the housing.

Specifically, the edge 410 of the cap may be welded to the bent portion 230. For example, the edge 410 of the cap may be in contact with the upper surface of the bent portion 230, and in this state, the edge 410 of the cap and the bent portion 230 may be welded.

In addition, at least a portion of the central portion 420 of the cap 400A may protrude toward the electrode assembly 100. For example, as illustrated in FIG. 16, the central portion 420 of the cap may protrude downward beyond the edge 410 thereof, and particularly, in the present embodiment, the entire central portion 420 may protrude downward. The central portion 420 of the cap may be in contact with the upper surface of the electrode assembly 100. The central portion 420 of the cap may be welded to the electrode assembly 100, so that the cap 400A and the first electrode of the electrode assembly 100 may be electrically connected.

That is, comparing the present embodiment with the embodiment illustrated in FIG. 5 above, the current collector 300, connecting the first electrode of the electrode assembly 100 and the housing 200 in the embodiment illustrated in FIG. 5, may not be provided in the present embodiment. In addition, the cap 400A may be welded to the electrode assembly 100, thereby electrically connecting the first electrode and the housing 200, and the first electrode and the housing 200 may be electrically connected through the cap 400A. That is, the cap 400A according to the present embodiment may replace the current collector.

In addition, the battery cell 10A according to the present embodiment may further include an electrode terminal 500, a second current collector 600, an insulating member G1, and an insulating sheet G2, and these configurations may be substantially the same as those in the embodiment illustrated in FIG. 5.

According to the present embodiment, an injection hole may be formed in the center of the cap 400A so as to pass therethrough. The injection hole may be a passage for injecting electrolyte into the housing 200. A sealing cap 450 may be coupled to the injection hole. After the electrolyte injection is complete, the injection hole may be sealed by the sealing cap 450.

In addition, although not shown in the drawing, the cap 400A may have a break portion. The break portion may be intended to rapidly discharge gases generated during thermal runaway of the battery cell. The break portion may be formed by forming a notch, groove, or the like in the cap 400A to reduce the strength of the corresponding portion. The break portion may be located in the form of, for example, a concentric circle, on the inner side of the bent portion.

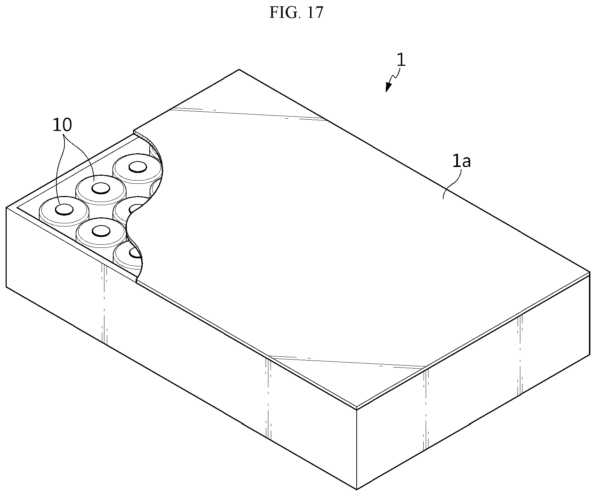

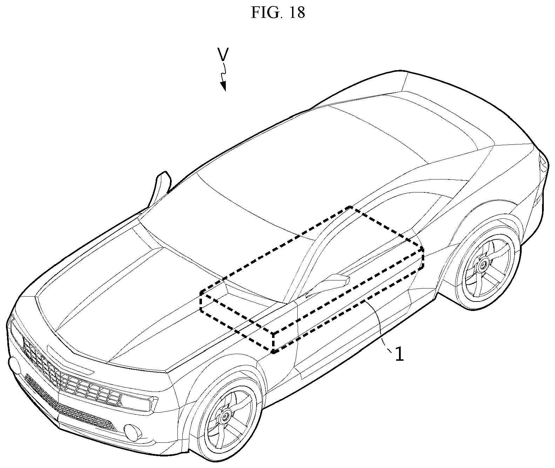

FIG. 17 is a drawing illustrating a battery pack according to an embodiment of the present disclosure. FIG. 18 is a drawing illustrating a vehicle including the battery pack in FIG. 17.

Referring to FIG. 17, a battery pack 1 according to the present disclosure may include at least one of the above-described battery cells 10 according to the present disclosure. In addition, the battery pack 1 according to the present disclosure may include a pack housing 1a capable of storing one or more battery cells 1. The battery pack 1 may be configured using a battery module, which is an intermediate assembly form, or may be configured directly without a battery module, as illustrated in the drawing. Since the battery cell 1 itself has a large volume, there may be no particular difficulty in implementing the battery pack 1 even without using an intermediate structure such as a battery module.

In addition, the battery pack 1 may further include various components of the battery pack 1 known at the time of filing of the present disclosure, such as a BMS, a relay, and a current sensor, in addition to the battery cell 10.

Referring to FIG. 18, a vehicle V according to the present disclosure may include at least one battery pack 1 according to the present disclosure.

The battery pack 1 according to the present disclosure may be applied to vehicles such as electric vehicles or hybrid vehicles. That is, the vehicle V according to the present disclosure may include a battery cell 10 according to the present disclosure or a battery pack 1 according to the present disclosure.

Since the battery pack and vehicle include the battery cell according to the present disclosure, they may share the advantages of the battery cell.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

V: Vehicle
1: Battery pack
10: Battery cell
100: Electrode assembly
200: Housing
210: Bottom portion
220: Side wall
230: Bent portion
300: Current collector
320: First coupling portion
330: Second coupling portion
400: Cap
500: Electrode terminal
600: Second current collector
G1: Insulating member
G2: Insulating sheet

## Claims

1. A battery cell comprising:
an electrode assembly configured by winding a first electrode, a second electrode, and a separator, interposed therebetween, around a winding axis;
a housing configured to receive the electrode assembly through an opening formed on one side thereof and comprising a bent portion formed by bending an end portion of the opening inward;
a current collector coupled to one surface of the electrode assembly and electrically connected to the first electrode of the electrode assembly; and
a cap coupled to the bent portion to cover the opening of the housing,
wherein a portion of the current collector is coupled to the bent portion of the housing.

2. The battery cell of claim 1,
wherein the current collector comprises a first coupling portion coupled to the electrode assembly and a second coupling portion coupled to the bent portion, and
wherein the second coupling portion is welded to the bent portion while being folded in at least two overlapping layers.

3. The battery cell of claim 1,
wherein welding is performed while a portion of the current collector is interposed between the cap and the bent portion.

4. The battery cell of claim 3,
wherein an inner end of the bent portion is formed with a step, and
wherein the portion of the current collector is inserted into the stepped portion so as to be disposed between the bent portion and the cap.

5. The battery cell of claim 3,
wherein a recess is formed at an edge of the cap to be recessed upward, and
wherein the portion of the current collector is inserted into the recess so as to be disposed between the bent portion and the cap.

6. The battery cell of claim 3,
wherein the current collector comprises a protrusion folded in two overlapping layers and protruding upward, and
wherein welding is performed while the protrusion is interposed between the cap and the bent portion.

7. The battery cell of claim 6,
wherein welding is performed while an edge of the current collector is in contact with a lower surface of the bent portion and an edge of the cap is in contact with the upper surface of the bent portion.

8. The battery cell of claim 1,
wherein welding is performed while an edge of the cap is interposed between the bent portion and the current collector.

9. A battery cell comprising:
an electrode assembly configured by winding a first electrode, a second electrode, and a separator, interposed therebetween, around a winding axis;
a housing configured to receive the electrode assembly through an opening formed on one side thereof and comprising a bent portion formed by bending an end portion of the opening inward; and
a cap coupled to the bent portion to cover the opening of the housing and electrically connected to the first electrode of the electrode assembly.

10. The battery cell of claim 9,
wherein the cap has an injection hole provided for injecting an electrolyte into the housing.

11. The battery cell of claim 9,
wherein an edge of the cap is coupled to the bent portion, and at least a portion of a central portion of the cap protrudes toward the electrode assembly to be coupled to the electrode assembly.

12. The battery cell of claim 9,
wherein the cap is disposed in an inner side of the bent portion and comprises a break portion for venting.

13. A battery pack comprising a battery cell of any one of claims 1 to 12.

14. A vehicle comprising a battery pack of claim 13.
